# EUROPEAN PATENT SPECIFICATION

(11) **EP 2 493 726 B1**
(45) Date of publication and mention of the grant of the patent: **17.10.2018**
(21) Application number: 10827096.8
(22) Date of filing: 28.10.2010
(51) Int. Cl.: B60R 22/18, B60R 22/12, B60R 22/24, A44B 11/25

(54) **BUCKLE FOR SAFETY BELT OF VEHICLE**
SCHNALLE FÜR EINEN FAHRZEUGSICHERHEITSGURT
BOUCLE POUR CEINTURE DE SÉCURITÉ DE VÉHICULE

(30) Priority: 29.10.2009 KR 20090103128
(43) Date of publication of application: 05.09.2012
(73) Proprietor: Autoliv Development AB, 447 83 Vårgårda (SE)
(72) Inventor: YOU, Byoung Gae, Wonju-si Gangwon-do 220-801 (KR); MOON, Chan Ki, Suwon-si Gyeonggi-do 440-200 (KR)
(74) Representative: Feucker, Max Martin
(86) International application number: PCT/KR2010/007471
(87) International publication number: WO 2011/053012

(56) References cited:
- KR-A- 20020 044 455
- KR-Y1- 200 416 588
- US-A1- 2004 060 761

## Description

### Technical Field

The present invention relates to a buckle for a safety belt of a vehicle, capable of removing the intermittent noise generated from the buckle of the safety belt caused by a pendulum when a passenger seat is empty in the vehicle, in which the pendulum is provided independently from a button and the pendulum is fixed by a pendulum fixing member such that the pendulum can be prevented from dangling even if a tongue of the safety belt is not fitted into the buckle. According to the present invention, the operation of a pendulum is controlled independently from a button, and a pendulum fixing member is provided to operate the pendulum only when the button operates, thereby reducing noise caused by the operation of the pendulum. In addition, the pendulum is stably supported by a separate member, and the pendulum is operated separately from the button so that the button and other parts can be prevented from being deformed or damaged.

### Background Art

In general, an airbag device and a seat belt device are installed in a vehicle to protect drivers and passengers. The airbag device and the seat belt device prevent the drivers and passengers from colliding with internal structures of the vehicle upon vehicle collision and restrain the drivers and passengers such that drivers and passengers may not be separated from seats. The safety belt is formed by fixing both ends of a webbing having a predetermined width to a floor panel and a center pillar, respectively, so that a user positioned between the floor panel and the center pillar can be prevented from spring out in the forward direction or in the colliding direction. The seat belt includes a retractor fixed to a center pillar to wind or release the webbing in normal time and a buckle installed on the floor panel to selectively fix a tongue provided at an end of the webbing. The retractor is provided therein with a fixing unit to fix the webbing upon emergency.

The buckle, which is coupled with a tongue provided on the webbing to fasten the safety belt, is freely and firmly coupled with the tongue. Accordingly, the occupant can rapidly and easily fasten or release the safety belt in normal times. In addition, the buckle fixes the safety belt upon emergency to prevent the occupant from being separated from the seat. A buckle according to the preamble of claim 1 is known from KR 200 416 588 Y1.

Regarding the buckle for the safety belt, when a passenger seat is empty in driving, especially, on a rough road, so that the safety belt tongue is not coupled with the buckle, noise is intermittently generated from the buckle. The intermittent noise from the buckle is caused by a pendulum serving as a weight member installed in the buckle. Such the pendulum serving as the weight member prevents the tongue of the safety belt from being released from the buckle after the tongue has been fitted into the buckle. The pendulum dangles when the pendulum does not perform the function thereof after the tongue has been fitted into the buckle and collides with a buckle frame or a buckle button provided inside the buckle due to the oscillation of the pendulum to cause noise. In addition, the noise may be caused if the buckle frame or the buckle button has a big size. Such a noise makes a driver nervous, so that the driver may feel uncomfortable.

In addition, if the pendulum is not fixed, the pendulum keeps on dangling inside the buckle so that the pendulum continuously and repeatedly collides with the buckle frame and the button. Thus, the durability of the buckle for the safety belt of the vehicle may be degraded. If the buckle is easily broken down due to the degradation of the durability of the buckle, an accident of the vehicle may occur, thereby causing irretrievable problems.

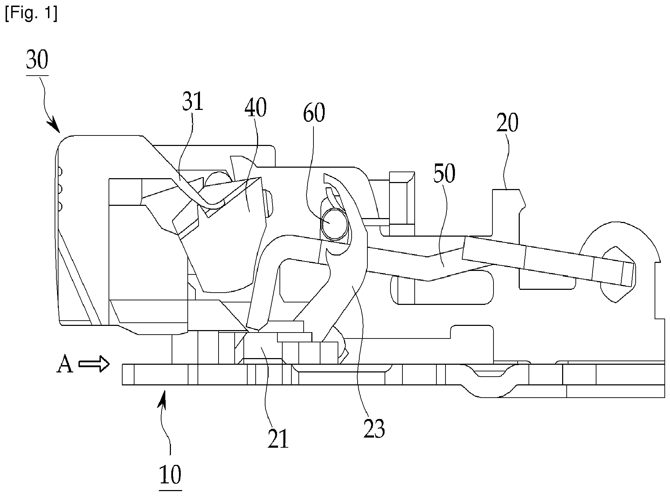

Therefore, conventionally, a buckle button includes a pendulum fixing support to fix the pendulum to prevent noise. As shown in FIG. 1, a pendulum fixing support 31 is provided in a buckle button 30 to fix a pendulum 40 while supporting the pendulum 40, thereby preventing the pendulum 40 from dangling or causing noise even if the pendulum 40 does not perform the function thereof. In other words, in order to fix the pendulum 40, the buckle button 30 includes an additional pendulum fixing support 31 having elasticity necessary to fix the pendulum 40.

However, even if the pendulum fixing support 31 is provided, the elastic force of the pendulum fixing support 31 may be degraded due to the frequent use of the pendulum 40 and the buckle button 30 and may be deformed due to the repeated use thereof and internal heat, so that the pendulum fixing support 31 does not perform the function thereof. If the pendulum fixing support 31 does not perform the function thereof, the noise is caused. Further, if the pendulum fixing support 31 is broken down due to the internal heat generated by the repeated use of the pendulum and the buckle button, a serious situation may be caused.

To this end, the rigidity of the pendulum fixing support 31 may be enhanced to increase the supporting force of the pendulum fixing support 31. The buckle frame 20 and the buckle button 30 may be resized, and the buckle suitable for the resized buckle frame 20 and the resized buckle button 30 may be manufactured to fix the pendulum. However, these are temporary countermeasures unable to fundamentally solve the above problems.

As fundamental countermeasures to solve the above problem, researches and studies to remove the pendulum fixing support 31 from the buckle button, and manufacture and employ an additional part to fix the pendulum are required. Due to the countermeasures, the buckle button is designed to be prevented from being deformed, so that the durability of the buckle for the safety belt can be improved.

### Disclosure of Invention

### Technical Problem

Accordingly, the present invention has been made to solve the above-mentioned problems occurring in the prior art, and an object of the present invention is to allow a driver to drive a vehicle under pleasant driving environment by reducing noise caused by the operation of the pendulum and preventing the noise of the pendulum from being generated from a buckle for a safety belt even if the driver drives the vehicle on a rough road.

Another object of the present invention is to provide a safety belt capable of preventing a pendulum from colliding with a buckle button and a buckle frame by operating the pendulum independently from the buckle button, thereby preventing breakage of the buckle caused by heat or deformation. Thus, the durability of the buckle for the safety belt can be improved and the safety of the driver can be ensured upon the vehicle accident.

Still another object of the present invention is to provide a separate pendulum fixing member to support the pendulum, thereby allowing the pendulum to operate independently from the buckle button, so that the pendulum can be stably supported, and the deformation and damage of the buckle button and other parts can be prevented due to the stable support of the pendulum.

### Solution to Problem

In order to accomplish the above objects of the present invention, the present invention is realized based on embodiments having the following structure.

According to one embodiment of the present invention, a buckle for a safety belt of a vehicle includes a buckle cover fixing the buckle of the safety belt for the vehicle and protecting the buckle from an outside, a buckle frame allowing buckle parts from being installed in the buckle cover, a buckle button releasing a tongue from the safety belt for the vehicle after the tongue has been fitted into the buckle, a pendulum installed in the buckle to prevent the tongue of the safety belt from being released from the buckle, and a separate pendulum fixing member fixing the pendulum independent of the buckle button even if the tongue of the safety belt is not coupled with the buckle to prevent the pendulum from dangling.

According to another embodiment of the present invention, the buckle frame includes a pendulum fixing member coupling hole allowing the pendulum fixing member to be coupled with the buckle frame, and the pendulum fixing member includes a locking protrusion fixedly coupled with the pendulum fixing member coupling hole. The pendulum fixing member includes a pendulum support fixing the pendulum to prevent the pendulum from dangling. The pendulum fixing member further includes a coupling guide the locking protrusion such that the locking protrusion is coupled with the pendulum fixing member coupling hole of the buckle frame.

According to still another embodiment of the present invention, the buckle cover includes a pendulum fixing member pressing protrusion that fixes the pendulum fixing member to prevent the pendulum fixing member from being separated, and the pendulum fixing member comprises a pressing groove, into which the pendulum fixing member pressing protrusion is fixedly inserted. The buckle frame includes an anti-separation groove to prevent the pendulum fixing member from being separated after the pendulum fixing member has been fixedly coupled, and the pendulum fixing member includes an anti-separation protrusion inserted into the anti-separation groove after the pendulum fixing member has been fixedly coupled with the coupling groove of the buckle frame to prevent the pendulum fixing member from being separated from the buckle frame.

### Advantageous Effects of Invention

As described above, the present invention having the above structure represents the following effects.

According to the present invention, the noise caused by the operation of the pendulum can be reduced, and the pendulum can be supported by a separate support member, thereby stably supporting the pendulum. Accordingly, even if a vehicle is running on a rough road, the noise of the pendulum is prevented from being generated from the buckle for the safety belt, so that a driver can drive the vehicle under pleasant driving environment.

According to the present invention, a separate pendulum fixing member is provided to support the pendulum, so that the pendulum can operate independently from the buckle button, thereby stably supporting the pendulum always. Such a stable support of the pendulum can prevent the buckle button and other parts from being deformed or damaged.

The present invention can provide a safety belt capable of preventing a pendulum from colliding with a buckle button and a buckle frame by operating the pendulum independently from the buckle button, thereby preventing breakage of the buckle caused by heat or deformation. Thus, the durability of the buckle for the safety belt can be improved and the safety of the driver can be ensured upon the vehicle accident.

Conventionally, when a pendulum fixing support is formed in the buckle button to fix the pendulum, the buckle button is repeatedly used due to the frequent fastening and releasing of the safety belt. Accordingly, the pendulum fixing support is repeatedly used, so that the elasticity and the rigidity of the pendulum fixing support may be weakened, or the pendulum fixing support may be worn out due to heat. Therefore, the pendulum fixing support does not perform the function thereof, but easily damaged. Therefore, a separate pendulum fixing member is provided to fixedly support the pendulum and prevent the oscillation of the pendulum. Accordingly, a buckle having higher durability can be provided.

### Brief Description of Drawings

FIG. 1 is a sectional view showing a buckle for a safety belt of a vehicle according to the related art;
FIG. 2 is a perspective view a buckle equipped with a pendulum fixing member according to one embodiment of the present invention;
FIG. 3 is a perspective view showing a buckle cover according to one embodiment of the present invention;
FIG. 4 is a perspective view showing a buckle frame according to one embodiment of the present invention;
FIG. 5 is a perspective view showing a buckle button according to one embodiment of the present invention;
FIG. 6 is a perspective view showing a pendulum fixing member according to one embodiment of the present invention;
FIG. 7 is a perspective view showing the internal structure of a buckle having a pendulum fixing member according to one embodiment of the present invention;
FIG. 8 is a view showing the internal structure of the pendulum fixing member according to one embodiment of the present invention; and
FIG. 9 is a detailed perspective view showing the internal structure of the buckle according to one embodiment of the present invention.

### Mode for the Invention

Hereinafter, a buckle device installed in a safety belt of a vehicle according to a preferred embodiment of the present invention will be described in detail with reference to accompanying drawings.

Prior to explaining the detailed description, it should be understood that the terms or words used in the present specification and claims may not be limited to common meanings or dictionary meanings, but interpreted as a meaning or a concept appropriate to the technical scope of the present invention under the principle that the inventor can coin new words to explain the present invention in the best manner.

Accordingly, the embodiments described in the present specification and the structure shown in accompanying drawings are only for illustrating the exemplary embodiments of the present invention within the technical scope of the present invention. Accordingly, the person skilled in the art should comprehend that various equivalents and modifications can be made in place of the embodiments.

FIG. 1 is a sectional view showing a buckle for a safety belt of a vehicle according to the related art. Hereinafter, the basic operating relation of the buckle provided in the basic safety belt for the vehicle will be described below with reference to FIG.1. In general, as shown in FIG. 1, the buckle of the safety belt includes a base frame 10, a buckle button 30, and a latch 50. The base frame 10 is provided thereon with a buckle frame 20 to lock or release the latch 50 in cooperation with a belt tongue (not shown) and the buckle button 30.

Accordingly, before the belt tongue is inserted into the buckle, the latch 50 is lifted clockwise from a horizontal position at an angle of about 10 degrees about a pivot axis provided at the rear of the buckle due to the repulsive force of a spring of the buckle frame 20. Accordingly, a locking bar 60 in the contact with a top surface of the latch 50 is also lifted.

In this state, if the belt tongue is inserted into an insertion slot formed between the base frame 10 and the buckle button 30 in an arrow direction A shown in FIG. 1, an ejector 21 installed in the buckle frame 20 is pressed rearward by an edge of a front end of the belt tongue. Simultaneously, a cantilever 23 pivotably coupled with a top surface of the ejector 21 rotates counterclockwise about a pivot support point of the ejector 21 while compressing a spring to push the spring rearward. Accordingly, the locking bar 60 is pressed downward by a front curved part of the cantilever 21 and pushed downward while pressurizing the latch 50, which has been pressed downward to make contact with a lower portion of the buckle button, and the pressed latch 50 moves downward from the pivot axis and is inserted into a locking slot of the belt tongue. Accordingly, the locking bar 60 is locked with the belt tongue.

However, the buckle includes a pendulum 40, which serves as a fixing member, at the internal space of the buckle button 30 as shown in FIG. 1. The pendulum 40 serving as the weighting member operates when the belt tongue is inserted into the buckle and coupled with the belt. In other words, as described above, the pendulum 40 applies weight to the locking bar 60 to prevent the locking bar 60 pressurizing the locking latch 50 downward from being separated from the locking latch 50. Although the detailed operating relation and function of the pendulum 40 are not shown in drawings, the pendulum 40 includes a pivot arm allowing a weighting part of the pendulum 40 to pivot about a hinge point, a push arm allowing the weighting part of the pendulum 40 to press-fit the locking bar 60, and a curved locking groove allowing the locking bar 60 to be fixedly locked with a front end of the push arm. The weighting part of the pendulum 40 press-restricts the locking bar 60 by using the intrinsic weight of the pendulum 40 to prevent the latch 50 from being separating upward (The function of the pendulum 40 has been disclosed in detail in Registered Utility Model No. 20-0416588 issued to applicant of the present invention, and the function of the pendulum 40 is included in the present invention).

Accordingly, the main function and operation of the pendulum 40 is performed when the belt tongue is inserted into the buckle and locked with the buckle. As described above, the pendulum 40 more strongly presses the locking bar 60 downward to prevent the latch 50 from being separated, so that the belt tongue is not released from the buckle to be separated from the buckle. Accordingly, the safety of the safety belt can be more firmly maintained.

Therefore, when the belt tongue is not coupled with the buckle neither locked with the buckle, the pendulum 40 does not make contact with the locking bar 60 neither press the locking bar 60 as shown in FIG. 1, so that the pendulum 40 is not fixed. Accordingly, the pendulum 40 dangles due to an intrinsic weight thereof to collide with the buckle button 30 and the buckle frame 20, which are peripheral parts, so that noise may be caused and the peripheral parts may be damaged. Therefore, a pendulum fixing support 31 is added to the buckle button 30 to fix the pendulum 40 when the pendulum 40 does not perform a function thereof, in detail, when the belt tongue is nor inserted into the buckle neither locked with the buckle, but released from the buckle. As shown in FIG. 1, such a pendulum fixing support 31 performs a simple function to prevent the pendulum 40 from colliding with the peripheral parts while dangling. Accordingly, the pendulum fixing support 31 is preferably integrated with the buckle button 30 and made of a member having strong elastic force and rigidity in the shape of a bar.

However, the pendulum fixing support 31 may be deformed or broken down due to frequently repeated use of the buckle button 30 and heat. When the pendulum fixing support 31 has been broken down, the pendulum 40 dangles and collides with the buckle button 30 and the buckle frame 20, which are peripheral parts, to cause noise or the damage of the peripheral parts. Accordingly, the durability of the safety belt may be degraded. Therefore, the present invention can provide a buckle for a safety buckle of a vehicle additionally including a pendulum fixing member acting as the pendulum fixing support 31 installed in the buckle button 30, so that noise can be reduced to provide a more pleasant driving environment, and the damage of peripheral parts can be reduced to improve the durability of the buckle.

Hereinafter, detailed description about components of the buckle of the safety belt for the vehicle according to the present invention will be made.

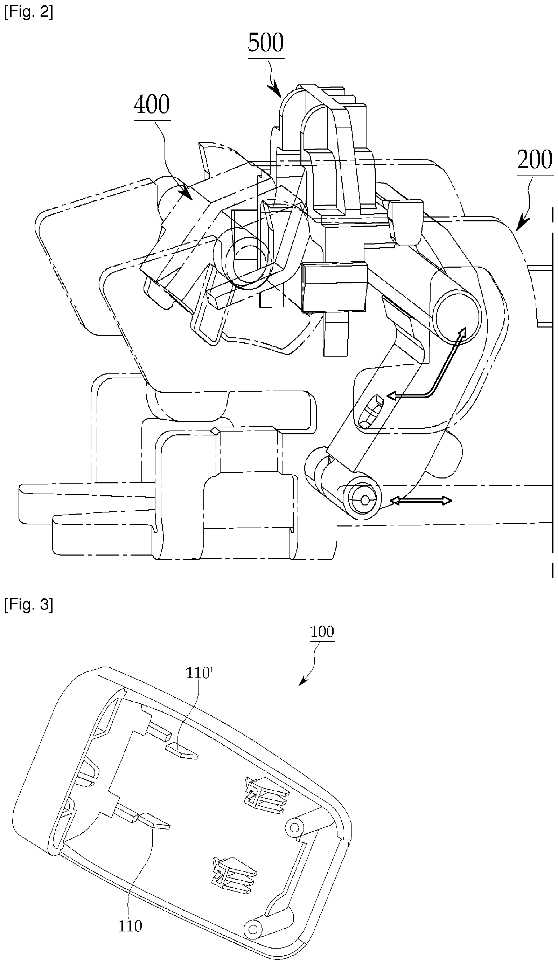

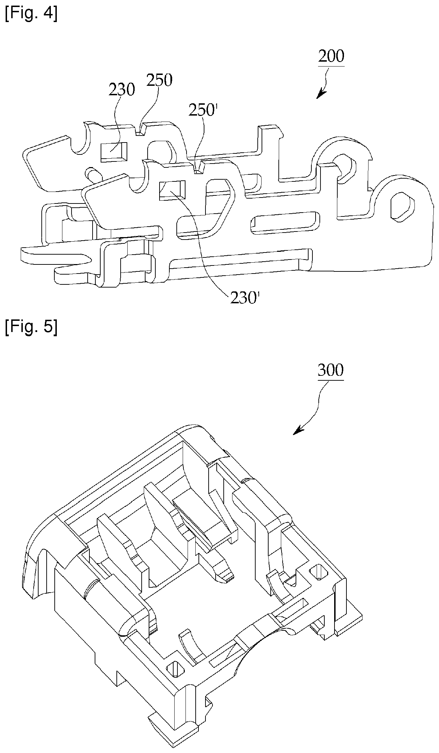

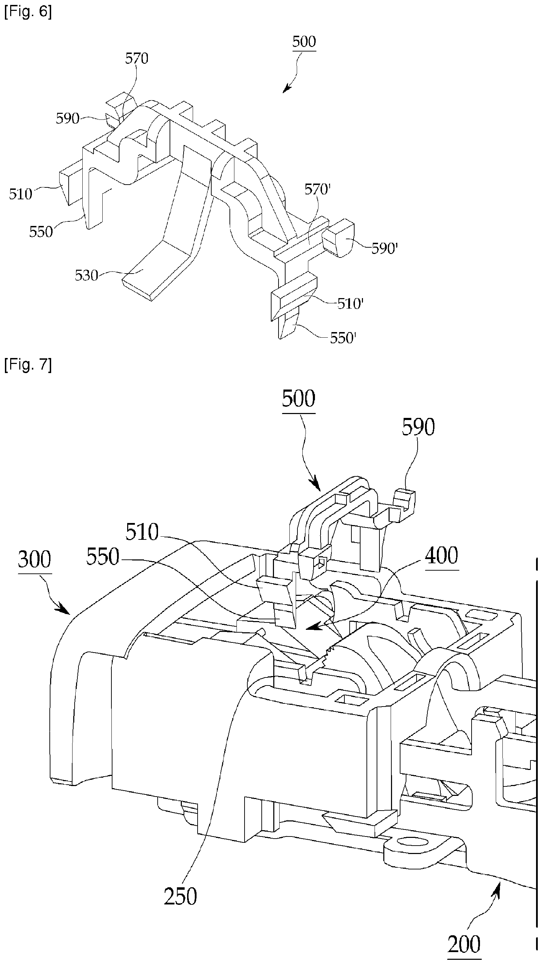

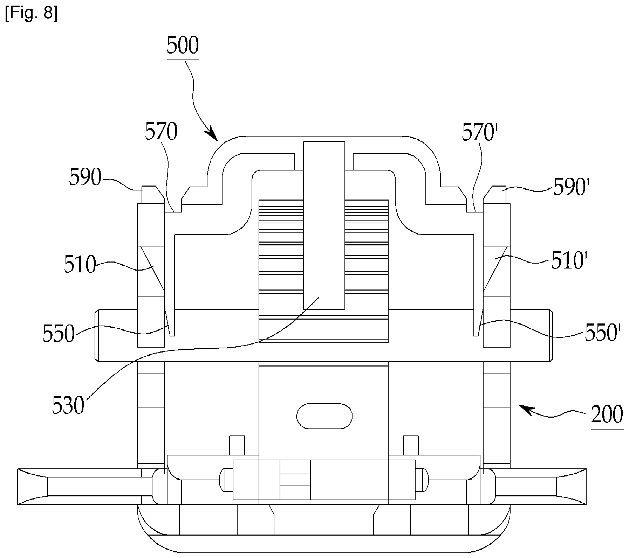

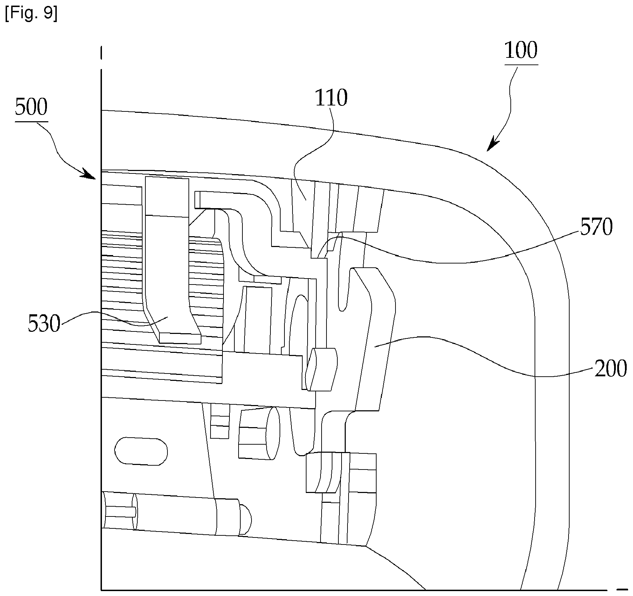

FIG. 2 is a perspective view showing a buckle equipped with a pendulum fixing member according to one embodiment of the present invention, FIG. 3 is a perspective view showing a buckle cover according to one embodiment of the present invention, and FIG. 4 is a perspective view showing a buckle frame. FIG. 5 is a perspective view showing a buckle button, FIG. 6 is a perspective view showing the pendulum fixing member according to one embodiment of the present invention, and FIG. 7 is a perspective view showing the internal structure of a buckle equipped with the pendulum fixing member according to one embodiment of the present invention. FIG. 8 is a view showing the internal structure of the pendulum fixing member mounted on the buckle frame according to one embodiment of the present invention, and FIG. 9 is a perspective view showing the internal structure of the buckle according to one embodiment of the present invention.

Hereinafter, the buckle of the safety belt for the vehicle equipped with the pendulum fixing member according to the present invention will be described in detail with reference to FIGS. 2 to 9.

As shown in the perspective view of FIG. 2, in the buckle of the safety belt for the vehicle equipped with a pendulum fixing member 500 according to the preset invention, the pendulum fixing member 500, which is a main component of the present invention, is mounted on a buckle frame 200 while being separated from a buckle button 300 to fix a pendulum 400. Therefore, even if the belt tongue is not inserted into neither locked with the buckle, the pendulum fixing member 500 stably fixes the pendulum 400 to prevent the pendulum 400 from dangling or colliding with peripheral parts. Accordingly, the buckle of the safety belt for the vehicle according to the present invention includes a buckle cover 100, the buckle frame 200, the buckle button 300, the pendulum 400, and the pendulum fixing member 500.

As shown in FIG. 3, the buckle cover 100 has a structure of fixing the buckle of the safety belt for the vehicle to protect the buckle from an external environment. The buckle cover 100 has a typical structure as an outer case serving as a top cover used in a conventional buckle for a safety belt of a vehicle. In the structure according to the present invention, the buckle cover 100 includes pendulum fixing member pressing protrusions 110 and 110' to press the pendulum fixing member 500 to prevent the pendulum fixing member 500, which are described below, from being separated from the buckle cover 100.

A pair of pendulum fixing member pressing protrusions 110 and 110' are symmetrically arranged in the buckle cover 100 about the center of the bottom surface of the buckle cover 100. The pendulum fixing member pressing protrusions 110 and 110' fix the pendulum fixing member 500 such that the pendulum fixing member 500 is not separated from the buckle cover 100. The pendulum fixing member pressing protrusions 110 and 110' have the structure corresponding to that of pressing grooves 570 and 570' of the pendulum fixing member 500, and are inserted into the pressing grooves 570 and 570' to press-fit the pendulum fixing member 500 such that the pendulum fixing member 500 is not separated from the buckle cover 100 upward. The function of the pendulum fixing member pressing protrusions 110 and 110' is shown in detail in FIG. 9.

As shown in FIG. 4, the buckle frame 200 allows parts to operate inside the buckle cover 100. The ejector 21 and the cantilever 23 are mounted on the buckle frame 200 so that the buckle performs the function thereof as recognized based on the operation relation of the above buckle (see FIG. 1). In particular, the buckle frame 200 is coupled with the pendulum fixing member 500, which is a main component of the present invention, such that the pendulum fixing member 500 performs the intrinsic operation thereof. The buckle frame 200 includes coupling holes 230 and 230' coupled with the pendulum fixing member 500, and anti-separation grooves 250 and 250' to prevent the pendulum fixing member 500 from being separated downward.

Hereinafter, the coupling holes 230 and 230' will be described with reference to FIG. 4. The coupling holes 230 and 230' have the form of rectangular through holes symmetrical to each other at both sides of the buckle frame 200. In general, the coupling holes 230 and 230' preferably have shapes corresponding to those of locking protrusions 510 and 510' to be described below. The coupling holes 230 and 230' allow the pendulum fixing member 500 to be coupled with the buckle frame 200. The locking protrusions 510 and 510' are pressed downward inside the buckle frame 200 so that the locking protrusions 510 and 510' are fitted into the coupling holes 230 and 230'. Details thereof will be made below with reference to FIGS. 7 and 8.

The anti-separation grooves 250 and 250' are symmetrical to each other at both sidewalls of the buckle frame 200, and concaved upward to prevent the pendulum fixing member 500 from being separated after the pendulum fixing member 500 is fixedly coupled with the buckle frame 200. Therefore, anti-separation protrusions 590 and 590' to be described below are engaged with the anti-separation grooves 250 and 250' respectively. Accordingly, the pendulum fixing member 500 fixedly coupled with the coupling grooves 250 and 250' of the buckle frame 200 is prevented from being separated downward, and left and rightward.

As shown in Fig. 5, the buckle button 300 has a through-structure at the central portion thereof, and is coupled with an upper portion of the button frame 200. The buckle button 300 releases the belt tongue of the safety belt for the vehicle after the buckle tongue has been inserted into the buckle. Since the skilled in the art can sufficiently comprehend the function of the buckle button 300 based on the locking and the releasing between a conventional buckle and the belt tongue, the details of the buckle button 300 will be omitted. The operating relation between the buckle button and the belt tongue has been clearly described in Korean Registered Utility Model No. 20-0416588 issued to applicant of the present invention, so that the details of the buckle button 300 will be omitted from the present specification. The present specification includes the contents of Korean Registered Utility Model No. 20-0416588 by reference.

Although the conventional buckle button 30 includes the pendulum fixing support 31 as shown in FIG.1, the present invention employs the pendulum fixing member 500 to fix the pendulum 400. Accordingly, as shown in FIG. 5, the buckle button 300 according to the present invention is manufactured without the pendulum fixing support 31. Therefore, the pendulum fixing support 31 is not worn out or damaged due to the repeated use of the buckle button, so that the noise of the pendulum 400 can be removed when the safety belt is not in a locking state. In addition, the pendulum fixing support 31 can prevent the pendulum 400 from dangling to cause the friction with peripheral parts, so that the peripheral parts are not damaged. Accordingly, the durability of the buckle can be improved, and the function of the safety belt can be improved.

The pendulum 400 has the same structure as that of the pendulum 40 shown in FIG. 1. As shown in FIG. 2, the pendulum 400 is installed in the button of the safety belt to prevent the belt tongue of the safety belt from being released from the buckle. The function of the pendulum 40 or 400 has been already described with reference to FIG.1. Accordingly, since the function and operation of the pendulum 400 are identical to those of the conventional pendulum 40, the details of the pendulum 400 will be omitted in order to avoid redundancy. As shown in FIG. 7, when the pendulum 400 does not perform the function thereof, that is, when the belt tongue of the safety belt is not inserted into the buckle, the pendulum 400 is stably and fixedly supported by a pendulum support 530 constituting the pendulum fixing member 500 to be described below, so that the pendulum 400 does not dangle or collide with peripheral parts to cause noise.

The pendulum fixing member 500 is a main component of the present invention. As shown in FIG. 6, regardless of the buckle button 300, even if the belt tongue of the safety belt is not coupled with the buckle, the pendulum fixing member 500 fixes the pendulum 400 to prevent the pendulum 400 from dangling. In other words, the pendulum fixing member 500 fixedly supports the pendulum 400 in a state in which the pendulum fixing support is removed from the buckle button 300. Accordingly, the noise of the buckle can be removed so that pleasant driving environment can be provided. Thus, the main object of the present invention can be achieved. In addition, the friction between the pendulum 400 and the internal parts can be prevented, so that the durability of the buckle can be improved, thereby increasing the life span of the safety belt. In addition, when the safety accident of a vehicle occurs, safety can be more ensured.

The pendulum fixing member 500 includes the locking protrusions 510 and 510' hooked with the coupling holes 230 and 230' of the buckle frame 200 such that the pendulum fixing member 500 is coupled with the buckle frame 200, the pendulum supports 530 and 530' directly making contact with the pendulum 400 to support the pendulum 400, coupling guides 550 and 550' allowing the locking protrusions 510 and 510' to be easily hooked with the coupling holes 230 and 230' of the buckle frame 200, the pressing holes 570 and 570' corresponding to the pressing protrusions 110 and 110' constituting the buckle cover 100 to prevent the pendulum fixing member 500 from being separated upward, and the anti-separation protrusions 590 and 590' hooked into the anti-separation grooves 250 and 250' of the buckle frame 200 to prevent the pendulum fixing member 500 from being separated downward.

As shown in FIG. 6, the locking protrusions 510 and 510' are paired and project from both outer-lower portions of the pendulum fixing member 500 while being symmetrical to each other. The locking protrusions 510 and 510' are hooked into the coupling holes 230 and 230'. As shown in FIGS. 6, 7, and 8, the locking protrusions 510 and 510' are press-fitted into the buckle frame 200 downward from the top of the buckle frame 200 until the locking protrusions 510 and 510' are hooked into the coupling holes 230 and 230'. Accordingly, the locking protrusions 510 and 510' preferably have a hook-type shape in which the locking protrusions 510 and 510' are easy to be inserted downward but difficult to be separated upward. The hook-type shape is only one embodiment of the present invention, and the locking protrusions 510 and 510' may have various shapes sufficient to perform the intrinsic function thereof within the right scope of the present invention.

The pendulum support 530 fixes the pendulum 400 to prevent the pendulum 400 from dangling. As shown in FIG. 6, the pendulum support 530 has the structure of a cantilever in the shape of a bent bar provided downward from the central portion of the pendulum fixing member 500. As shown in FIGS. 2 and 7, the pendulum support 530 directly makes contact with the pendulum 400 to fixedly support the pendulum 400. Since the pendulum 400 is a weighting member, the pendulum support 530 may preferably include an elastic member having superior rigidity to stably support and fix the pendulum 400.

As shown in FIG. 6, the paired coupling guides 550 and 550' are formed at both lower ends of the pendulum fixing member 500 while being symmetrical to each other. The coupling guides 550 and 550' become gradually narrower toward the ends thereof. Referring to FIGS. 7 and 8, the coupling guides 550 and 550' guide the locking protrusions 510 and 510' to be coupled with the coupling holes 230 and 230' of the buckle frame 200. The coupling guides 550 and 550' are preferably curved inward such that the pendulum fixing member 500 is more easily inserted downward into the buckle frame 200 and coupled with the buckle frame 200.

As shown in FIG. 6, the pressing grooves 570 and 570' are recessed downward while being symmetrical to each other at both sides of the pendulum fixing member 500. As described above, the pressing grooves 570 and 570' correspond to the pressing protrusions 110 and 110' of the buckle cover 100. In other words, as shown in FIG. 9, the pressing protrusions 110 and 110' formed in the buckle cover 100 are press-fitted into the pressing grooves 570 and 570'. so that the pendulum fixing member 500 is not separated upward when the buckle cover 100 is assembled with the pendulum fixing member 500. Therefore, the pendulum fixing member 500 can be more safely coupled with the buckle frame 200, so that the intrinsic function of the pendulum fixing member 500 can be ensured.

As shown in FIG. 6, the anti-separation protrusions 580 and 590' project upward from both upper portions of the pendulum fixing member 500 while being symmetrical to each other. As shown in FIG. 7, the anti-separation protrusions 590 and 590' act as a stopper to prevent the pendulum fixing member 500 from being directed more downward after the pendulum fixing member 500 has been fixedly coupled with the coupling holes 230 and 230' of the buckle frame 200. As shown in FIGS. 7 and 8, the anti-separation protrusions 590 and 590' correspond to the anti-separation grooves 250 and 250' of the buckle frame 200 so that the anti-separation protrusions 590 and 590' are inserted into the anti-separation grooves 250 and 250' while being fixed in the horizontal direction.

Although the exemplary embodiments of the present invention have been described, it is understood that the exemplary embodiments help one ordinary skilled in the art to easily realize the buckle of the safety belt for the vehicle of the invention which is limited by the claims.

## Claims

1. A buckle for a safety belt of a vehicle comprising:
a buckle cover (100) fixing the buckle of the safety belt for the vehicle and protecting the buckle from an outside;
a buckle frame (200) allowing buckle parts from being installed in the buckle cover (100);
a buckle button (300) releasing a tongue from the safety belt for the vehicle after the tongue has been fitted into the buckle;
a pendulum (400) installed in the buckle to prevent the tongue of the safety belt from being released from the buckle; **characterised by** a separate pendulum fixing member (500) fixing the pendulum (400) independent of the buckle button (300) even if the tongue of the safety belt is not coupled with the buckle to prevent the pendulum (400) from dangling.

2. The buckle of claim 1, wherein the pendulum fixing member (500) includes a pendulum support (530) fixing the pendulum (400) to prevent the pendulum (400) from dangling.

3. The buckle of claim 2, wherein the buckle frame (200) includes a pendulum fixing member coupling hole (230) allowing the pendulum fixing member (500) to be coupled with the buckle frame (200), and the pendulum fixing member (500) includes a locking protrusion (510) fixedly coupled with the pendulum fixing member coupling hole (230).

4. The buckle of claim 3, wherein the pendulum fixing member (500) further comprises a coupling guide (550) the locking protrusion (510) such that the locking protrusion (510) is coupled with the pendulum fixing member coupling hole (230) of the buckle frame.

5. The buckle of one of claims 1 to 4, wherein the buckle cover (100) comprises a pendulum fixing member pressing protrusion (110) that fixes the pendulum fixing member (500) to prevent the pendulum fixing member (500) from being separated, and the pendulum fixing member (500) comprises a pressing groove (570), into which the pendulum fixing member pressing protrusion (110) is fixedly inserted.

6. The buckle of one of claims 1 to 4, wherein the buckle frame (200) comprises an anti-separation groove (250) to prevent the pendulum fixing member (500) from being separated after the pendulum fixing member (500) has been fixedly coupled, and the pendulum fixing member (500) comprises an anti-separation protrusion (590) inserted into the anti-separation groove (250) after the pendulum fixing member (500) has been fixedly coupled with the coupling hole (230) of the buckle frame (200) to prevent the pendulum fixing member (500) from being separated from the buckle frame (200).

7. The buckle of claim 5, wherein the buckle frame (200) comprises an anti-separation groove (250) to prevent the pendulum fixing member (500) from being separated after the pendulum fixing member (500) has been fixedly coupled, and the pendulum fixing member (500) comprises an anti-separation protrusion(590) inserted into the anti-separation groove (25) after the pendulum fixing member (500) has been fixedly coupled with the coupling hole (230) of the buckle frame (200) to prevent the pendulum fixing member (500) from being separated from the buckle frame (200).

## Patentansprüche

1. Schnalle für einen Fahrzeugsicherheitsgurt, umfassend:
eine Schnallenabdeckung (100), die die Schnalle des Fahrzeugsicherheitsgurtes befestigt und die Schnalle von einer Außenseite schützt;
einen Schnallenrahmen (200), der ermöglicht, dass Schnallenteile in der Schnallenabdeckung (100) eingebaut werden;
einen Schnallenknopf (300), der eine Zunge des Fahrzeugsicherheitsgurtes freigibt, nachdem die Zunge in die Schnalle eingepasst wurde;
ein in der Schnalle eingebautes Pendel (400), das verhindert, dass die Zunge des Sicherheitsgurtes von der Schnalle gelöst wird;
**gekennzeichnet durch**
ein separates Pendelbefestigungselement (500), das das Pendel (400) unabhängig von dem Schnallenknopf (300) befestigt, selbst wenn die Zunge des Sicherheitsgurtes nicht mit der Schnalle gekoppelt ist, um zu verhindern, dass das Pendel (400) sich bewegt.

2. Schnalle gemäß Anspruch 1, wobei das Pendelbefestigungselement (500) eine Pendelstütze (530) aufweist, die das Pendel (400) befestigt, um zu verhindern, dass das Pendel (400) sich bewegt.

3. Schnalle gemäß Anspruch 2, wobei der Schnallenrahmen (200) ein Pendelbefestigungselement-Kopplungsloch (230) aufweist, das es ermöglicht, das Pendelbefestigungselement (500) mit dem Schnallenrahmen (200) zu koppeln, und das Pendelbefestigungselement (500) einen Verriegelungsvorsprung (510) aufweist, der fest mit dem Pendelbefestigungselement-Kopplungsloch (230) gekoppelt ist.

4. Schnalle gemäß Anspruch 3, wobei das Pendelbefestigungselement (500) weiterhin eine Kopplungsführung (550) umfasst, die den Verriegelungsvorsprung (510) derart führt, dass der Verriegelungsvorsprung (510) mit dem Pendelbefestigungselement-Kopplungsloch (230) des Schnallenrahmens gekoppelt wird.

5. Schnalle gemäß einem der Ansprüche 1 bis 4, wobei die Schnallenabdeckung (100) einen Pendelbefestigungselement-Druckvorsprung (110) umfasst, der das Pendelbefestigungselement (500) befestigt, um zu verhindern, dass das Pendelbefestigungselement (500) sich löst, und das Pendelbefestigungselement (500) eine Drucknut (570) umfasst, in die der Pendelbefestigungselement-Druckvorsprung (110) fest eingesetzt ist.

6. Schnalle gemäß einem der Ansprüche 1 bis 4, wobei der Schnallenrahmen (200) eine Lockerungssicherungsnut (250) umfasst, um zu verhindern, dass das Pendelbefestigungselement (500) sich löst, nachdem das Pendelbefestigungselement (500) fest gekoppelt worden ist, und das Pendelbefestigungselement (500) einen Lockerungssicherungsvorsprung (590) umfasst, der in die Lockerungssicherungsnut (250) eingesetzt ist, nachdem das Pendelbefestigungselement (500) fest mit dem Kopplungsloch (230) des Schnallenrahmens (200) gekoppelt worden ist, um zu verhindern, dass das Pendelbefestigungselement (500) von dem Schnallenrahmen (200) sich löst.

7. Schnalle gemäß Anspruch 5, wobei der Schnallenrahmen (200) eine Lockerungssicherungsnut (250) umfasst, um zu verhindern, dass das Pendelbefestigungselement (500) sich löst, nachdem das Pendelbefestigungselement (500) fest gekoppelt worden ist, und das Pendelbefestigungselement (500) einen Lockerungssicherungsvorsprung (590) umfasst, der in die Lockerungssicherungsnut (250) eingesetzt ist, nachdem das Pendelbefestigungselement (500) fest mit dem Kopplungsloch (230) des Schnallenrahmens (200) gekoppelt worden ist, um zu verhindern, dass das Pendelbefestigungselement (500) von dem Schnallenrahmen (200) getrennt wird.

## Revendications

1. Boucle pour une ceinture de sécurité d'un véhicule, comprenant :
un couvercle de boucle (100), fixant la boucle de la ceinture de sécurité du véhicule et protégeant la boucle de l'environnement extérieur ;
un cadre de boucle (200), permettant à des parties de la boucle d'être installées dans le couvercle de boucle (100) ;
un bouton de boucle (300), libérant une languette de la ceinture de sécurité du véhicule après que la languette a été insérée dans la boucle ;
un balancier (400), installé dans la boucle pour empêcher que la languette de la ceinture de sécurité ne se libère de la boucle ;
**caractérisée en ce que**
un élément (500) distinct de fixation du balancier, qui fixe le balancier (400) indépendamment du bouton de boucle (300) même si la languette de la ceinture de sécurité n'est pas couplée à la boucle, pour empêcher un flottement du balancier (400).

2. Boucle selon la revendication 1, dans laquelle l'élément (500) de fixation du balancier comporte un support de balancier (530) fixant le balancier (400) pour empêcher un flottement du balancier (400).

3. Boucle selon la revendication 2, dans laquelle le cadre de boucle (200) comprend un trou (230) pour le couplage de l'élément de fixation du balancier, qui permet à l'élément (500) de fixation du balancier d'être couplé au cadre de boucle (200), et l'élément (500) de fixation du balancier comprend une saillie de verrouillage (510) couplée à demeure au trou (230) pour le couplage de l'élément de fixation du balancier.

4. Boucle selon la revendication 3, dans laquelle l'élément (500) de fixation du balancier comprend en outre un guide de couplage (530) guidant la saillie de verrouillage (510) de telle sorte que la saillie de verrouillage (510) soit couplée au trou (230) pour le couplage de l'élément de fixation du balancier, du cadre de boucle,.

5. Boucle selon l'une des revendications 1 à 4, dans laquelle le couvercle de boucle (100) comprend une saillie (110) appuyant sur l'élément de fixation du balancier, qui fixe l'élément (500) de fixation du balancier pour empêcher que l'élément (500) de fixation du balancier ne se sépare, et l'élément (500) de fixation du balancier comprend une gorge d'appui (570), dans laquelle la saillie (110) appuyant sur l'élément de fixation du balancier est insérée à demeure.

6. Boucle selon l'une des revendications 1 à 4, dans laquelle le cadre de boucle (200) comprend une rainure anti-séparation (250), pour empêcher que l'élément (500) de fixation du balancier ne se sépare après que l'élément (500) de fixation du balancier a été couplé à demeure, et l'élément (500) de fixation du balancier comprend une saillie anti-séparation (590) insérée dans la rainure anti-séparation (250) après que l'élément (500) de fixation du balancier a été couplé à demeure au trou (230) pour le couplage du cadre de boucle (200), pour empêcher que l'élément (500) de fixation du balancier ne se sépare du cadre de boucle (200).

7. Boucle selon la revendication 5, dans laquelle le cadre de boucle (200) comprend une rainure anti-séparation (250), pour empêcher que l'élément (500) de fixation du balancier ne se sépare après que l'élément (500) de fixation du balancier a été couplé à demeure, et l'élément (500) de fixation du balancier comprend une saillie anti-séparation (590) insérée dans la rainure anti-séparation (25) après que l'élément (500) de fixation du balancier a été couplé à demeure au trou (230) pour le couplage du cadre de boucle (200) pour empêcher que l'élément (500) de fixation du balancier ne se sépare du cadre de boucle (200).
